(19) Europäisches Patentamt / European Patent Office / Office européen des brevets

(11) **EP 0 942 629 B1**

(12) **FASCICULE DE BREVET EUROPEEN**

(45) Date de publication et mention
de la délivrance du brevet:
**19.11.2008 Bulletin 2008/47**

(51) Int Cl.:
*H05B 3/03* (2006.01)   *H05B 3/12* (2006.01)

(21) Numéro de dépôt: **99400623.7**

(22) Date de dépôt: **12.03.1999**

(54) **Procédé de détermination du comportement électrochimique d'un matériau d'électrode et de mesure de chute de potentiel interfaciale et dispositif de chauffage ohmique**

Verfahren zum Erfassen des elektrochemisches Verhalten eines Elektrodenmaterial und zum Messen des Spannunsabfalls an den Phasengrenzflächen und Verfahren zum ohmischen Heizen

Process for determining the electrochemical behaviour of an electrode material and for measuring the interfacial potential drop and apparatus for ohmic heating

(84) Etats contractants désignés:
**DE ES FR GB GR IE IT NL SE**

(30) Priorité: **13.03.1998 FR 9803154**

(43) Date de publication de la demande:
**15.09.1999 Bulletin 1999/37**

(73) Titulaire: **Electricité de France, Société Anonyme
75008 Paris (FR)**

(72) Inventeurs:
• **Berthou, Marc
77670 Sain-Mammes (FR)**
• **Laurent, Marie-Hélène
77810 Thomery (FR)**
• **Hebert, Sébastien
75018 Paris (FR)**

(74) Mandataire: **Vaillant, Jeanne et al
Ernest Gutmann - Yves Plasseraud S.A.S.
3, rue Auber
75009 Paris (FR)**

(56) Documents cités:
EP-A- 0 418 404       US-A- 5 235 905
US-A- 5 609 900

• R. ZITNY, J. SESTAK: "DIRECT OHMIC HEATING IN LAMINAR FLOWS IN DUCTS" ACTA POLYTECHNICA, vol. 36, no. 4, 1996, pages 71-83, XP002085901 TECH. UNIV. PRAGUE, CZECH REPUBLIC
• DATABASE INSPEC INSTITUTE OF ELECTRICAL ENGINEERS, STEVENAGE, GB Inspec No. 4508551 [1]LECTRICIT[1] DE FRANCE, CLAMART, FRANCE, mai 1993 P. LE PEURIAN, Y. QUEFF[1]LEC: "UNE NOUVELLE APPLICATION DE L'EFFET JOULE POUR R[1]CHAUFFER LES FLUIDES INDUSTRIELS: LE CHAFFAGE OHMIQUE" XP002085902

**Description**

L'invention se rapporte au domaine du chauffage ohmique, appliqué pour l'essentiel aux secteurs de l'agro-alimentaire, de la chimie fine ou du traitement des effluents.

En ce qui concerne les industries agro-alimentaires, le chauffage ohmique, encore appelé chauffage par conduction directe, permet de cuire, pasteuriser, stériliser, des produits particuliers, thermosensibles ou visqueux. Pour la chimie, ce chauffage permet d'effectuer des traitements à forte densité de puissance ou nécessitant des températures homogènes en tout point. Quant au traitement d'effluent, il consiste essentiellement à chauffer et concentrer des boues épaisses.

Le chauffage ohmique est classiquement effectué dans une cuve comportant au moins deux électrodes. Une différence de potentiel électrique est appliquée aux bornes de ces électrodes afin d'établir, entre celles-ci, un courant électrique de densité égale à quelques milliers d'A/m$^2$, par exemple de 100 à 5000 A/m$^2$ avec un courant à 50 Hz (et plus si on augmente la fréquence, par exemple 15000 A/m$^2$), suivant le produit à chauffer et les résultats à obtenir (durée, température). Ce courant est ainsi amené au contact du produit disposé dans la cellule. Le courant traverse alors le produit qui chauffe par effet Joule, jusqu'à atteindre des températures, suivant le cas, de quelques dizaines à 90°C, voire 140°C, pendant des durées allant de quelques dixièmes de seconde à plusieurs heures.

A la différence d'une cellule d'électrolyse, la cellule de chauffage ohmique est alimentée en courant alternatif pour favoriser l'effet Joule par déplacement alternatif des espèces ioniques contenues dans la solution, alors que, à l'opposé, le courant continu produit dans une cellule d'électrolyse tend à favoriser les réactions électrochimiques par échange d'électrons entre les électrodes et la solution.

Le problème du chauffage ohmique est d'éviter la pollution ou la détérioration du produit chauffé. Ces dégradations sont dues à la corrosion des électrodes par le passage du courant et aux réactions électrochimiques dues à ce même courant. De telles réactions électrochimiques, même limitées, peuvent être difficilement ou tout à fait inacceptable pour certaines des applications visées ci-dessus, telles que celles de l'agro-alimentaire, qui interdisent toute pollution ou transformation non souhaitée dudit produit.

Pour résoudre ce type de problème, il a déjà été proposé d'utiliser un système à racloir pour retirer ou détourner la matière qui se dépose sur les électrodes lorsque le milieu, chauffé, s'écoule dans un tuyau. Le chauffage de matières alimentaires, pour cuire ou stériliser ou chauffer des réactifs chimiques, est ainsi rendu plus uniforme dans ces milieux, empêchant ainsi son oxydation et les effets nuisibles qui en découlent. Un tel système est décrit par exemple dans la demande WO 8900384.

Afin d'éviter l'électrolyse qui génère des décontaminants indésirables, il est également connu par le brevet GB 2282052, d'utiliser une énergie électrique, des fréquences comprises entre 50 et 99 kHz, une tension électrique basse, et des produits alimentaires sans contact avec les électrodes par la mise en place d'une barrière de séparation pendant le chauffage.

Ces solutions ne sont pas simples à mettre en oeuvre ni réellement efficaces puisqu'elles ne prennent pas en compte l'origine des défauts à éviter, mais tendent simplement à limiter leurs effets nuisibles. Au contraire, la présente invention propose d'analyser les variations du potentiel d'interaction électrode - solution afin de définir les conditions d'apparition de courants faradiques provoqués par la mise en oeuvre de réactions électrochimiques, et agir sur les paramètres intervenant dans cette définition afin d'éviter les phénomènes de pollution et d'électrolyse évoqués plus haut.

Plus précisément, l'invention a pour objet un procédé de détermination du comportement électrochimique d'une électrode de travail, en fonction de son matériau constitutif. Ce procédé est basé sur la mesure voltampérométrique, en solution saline, de l'intensité du courant électrique circulant entre l'électrode testée et une contre-électrode en fonction d'une différence de potentiel appliquée entre l'électrode de travail et une électrode de référence, cette différence de potentiel variant selon un balayage périodique sur une plage de valeurs suffisante pour engendrer, aux extrémités de cette plage, des courants à variation non linéaire en fonction du potentiel appliqué, et déterminer une plage de différences de potentiel de l'électrode de travail admissible pour un chauffage ohmique, dans laquelle le courant conserve une variation linéaire et au-delà de laquelle le seuil énergétique de déclenchement de réactions électrochimiques de l'électrode de travail est franchi.

L'invention concerne également un procédé et un dispositif de mesure de chute de potentiel interfaciale électrode - solution dans des conditions de chauffage ohmique. Ce dispositif comporte une sonde de platine dont l'extrémité est affinée pour présenter une surface de mesure réduite tout en restant compatible avec la technologie appliquée à ce type d'électrode. La sonde est disposée à différentes distances rapprochées de l'électrode à tester, de préférence inférieures à 0,1 mm, les mesures de distance étant alors déduites d'une mesure angulaire adaptée. La mesure de la chute de potentiel interfacial est obtenue par extrapolation linéaire à distance nulle des différentes valeurs de potentiel obtenues.

L'invention est alors appliquée à l'adaptation des conditions de chauffage ohmique en fonction de la plage de différence de potentiel admissible du matériau utilisé pour constituer les électrodes du chauffage ohmique : ces conditions sont adaptées par réglage de deux paramètres du chauffage ohmique, à savoir la densité du courant et la fréquence de la tension appliquée, pour que la valeur de la chute de potentiel interfaciale du matériau utilisé, mesurée avec le dispositif précédent, soit située dans la plage de différence de potentiel admissible, déterminée selon le procédé voltampérométrique pour ce même matériau. Le matériau est utilisable comme électrode en chauffage ohmique lorsque les valeurs de densité de courant et de fréquence de la tension limitent sa chute de potentiel interfaciale à l'intérieur de la plage de potentiel admissible, telle que définie précédemment. Pour ce faire, il est à noter que la chute de potentiel interfaciale est une fonction croissante de la densité de courant et une fonction décroissante de la fréquence appliquée. Mais l'utilisation d'une fréquence élevée, par exemple 2500 ou 5000 Hz, pour obtenir un calage correct de la chute de potentiel interfaciale d'un matériau donné, représente un surcoût non négligeable et doit être évitée si possible pour des raisons économiques.

Un paramètre global, produit de la plage de potentiel admissible par le carré de la capacité interfaciale de l'électrode étudiée, déterminée également par voltampérométrie, est utilisé selon l'invention pour classer différents matériaux constitutifs d'électrodes selon leur aptitude à réaliser un chauffage ohmique sans risque. Il correspond à l'énergie de chauffe fournie par un matériau donné traversé par un courant donné considéré comme purement capacitif, c'est-à-dire un courant engendré uniquement par la polarisation des électrodes, sans qu'intervienne de composante électrochimique.

Le classement selon le paramètre global entre différents matériaux testés, montrent que les revêtements de type DSA (initiales de "Dimensions Stable Anode", c'est-à-dire anode stable en dimensions, en terminologie anglaise), constitués d'un support en titane recouvert de couches de semi-conducteur formées d'oxydes de métaux nobles (Ru, Ir, Ta, ...), sont nettement supérieurs aux matériaux massifs tels qu'un acier inoxydable connu sous la dénomination "Inox 316L", un alliage à base de nickel dénommé "hastelloy C22" (3% Fe, 3% W, 22% Cr, 3% Co, 56% Ni, 13% Mo), ou du carbone utilisé sous forme vitreuse. Les matériaux DSA sont connus et distribués dans le commerce, par exemple par la société De Nora-Permelec.

Des essais de semi-endurance en chauffage ohmique confirment les classements obtenus, les matériaux de type DSA ayant montré une totale résistance à des densités de courant de quelques milliers d'ampères par mètre carré pendant plusieurs jours.

L'intérêt de l'utilisation des DSA comme électrodes de chauffage ohmique est d'autant appréciable qu'elles sont compatibles avec l'utilisation d'une alimentation en tension alternative à la fréquence de distribution du réseau (par exemple 50 Hz). Avec les matériaux de type DSA, il est ainsi possible d'utiliser directement le courant à la fréquence du secteur, sans avoir à prévoir l'utilisation de plus hautes fréquences.

Les anodes en DSA sont habituellement destinées aux électrolyseurs pour le dégagement d'oxygène ou de chlore à partir d'eau douce ou d'eau de mer. Traversées par un courant continu, ces anodes favorisent les réactions électrochimiques. C'est pourquoi, il n'était pas indiqué, a priori, d'utiliser ces anodes en chauffage ohmique. Or il s'est avéré qu'elles constituent le matériau le plus performant pour empêcher ces mêmes réactions électrochimiques, lorsqu'elles sont utilisées en courant alternatif pour le chauffage ohmique.

La présente invention concerne également un procédé de chauffage ohmique dans lequel on utilise des électrodes en matériau de type DSA.

De plus, la présente invention concerne des appareils de chauffage ohmique comportant des électrodes en matériau de type DSA, ainsi que l'utilisation pour la fabrication d'électrodes pour le chauffage ohmique, de matériau de type DSA.

Les paramètres clefs du chauffage ohmique sont la fréquence de la tension appliquée et la densité de courant nécessaire. Avantageusement, l'intervention d'autres paramètres (température, rugosité de la surface des électrodes) sont pris en compte afin d'obtenir des résultats optimisés pour le chauffage ohmique.

Un appareil de chauffage ohmique comporte usuellement : une alimentation électrique avec son armoire de contrôle commande et une ou plusieurs cellules ohmiques. Une cellule ohmique est constituée d'une structure isolante de l'électricité qui contient le produit à chauffer et de deux ou plusieurs électrodes en contact avec la solution. De tels appareils de chauffage ohmiques sont décrits notamment dans les brevets FR2704708 et FR2722053.

Les électrodes sont constituées d'un substrat en titane massif recouvert de couche d'oxydes métalliques de métaux nobles (Ruthénium, Iridium, Tantale). On peut ainsi par exemple utiliser des couches d'oxydes comportant respectivement 100% d'oxyde de ruthénium, 50% d'oxyde de ruthénium et 50% d'oxyde d'iridium, 50% d'oxyde d'iridium et 50% d'oxyde de tantale. Ces deux dernières variantes possèdent des caractéristiques beaucoup plus intéressantes pour le chauffage ohmique. Ces caractéristiques sont liées à la valeur de la capacité interfaciale supérieures à celle de la variante comportant 100% Ruthénium qui est dégradée plus rapidement que les deux autres. Les valeurs de la capacité interfaciale mesurées dans une solution aqueuse de chlorure de sodium d'une conductivité électrique de 0,7 S/m à la fréquence de 50 Hz sont respectivement de 1,9 à 5,3 mF/cm$^2$. Plus la valeur de la capacité interfaciale est élevée, plus la puissance transitée dans le produit peut être importante.

Le taux de constituants peut varier sur une certaine plage allant d'environ 25 à environ 75% pour chacun des constituants, par exemple 25% d'oxyde d'iridium - 75% d'oxyde de tantale et 75% d'oxyde d'iridium-25% d'oxyde de tantale.

Les constituants du revêtement ont été adaptés de telle sorte à obtenir des valeurs de capacités interfaciales élevées dans le produit à traiter.

La rugosité de la surface (caractérisée par Ra paramètre généralement utilisé étant défini comme la moyenne arithmétique des déviations du profil par rapport à la ligne moyenne par $\mu$m) a pu être amenée de 18 $\mu$m à moins de 1,8 $\mu$m. Pour certaines variantes (50% d'oxyde de ruthénium et 50% d'oxyde d'iridium), la rugosité a été ramenée à 0,6 $\mu$m. De préférence, selon l'invention, la rugosité est de moins de 1,8 $\mu$m, en particulier moins de 1 $\mu$m.

D'autres caractéristiques et avantages de l'invention apparaîtront à la lecture de la description qui suit, en référence aux figures annexées qui représentent respectivement :

- la figure 1, une modélisation du comportement électrique de la cellule de chauffage ohmique;
- la figure 2 illustre un montage de voltampérométrie cyclique apte à déterminer les valeurs limites, anodique et cathodique, de la chute de potentiel interfaciale d'une électrode;
- la figure 3, un voltammogramme I = f(E) obtenu pour un matériau de type DSA "B";
- la figure 4, des courbes de courant faradique pour différents matériaux massiques et à revêtement de type DSA;
- la figure 5, un diagramme de mesures de chutes de potentiel obtenues entre une électrode en matériau DSA "B" et une sonde de platine disposées à différentes distances rapprochées;
- la figure 6, un appareillage utilisé pour obtenir les mesures de chutes de potentiel interfaciales.

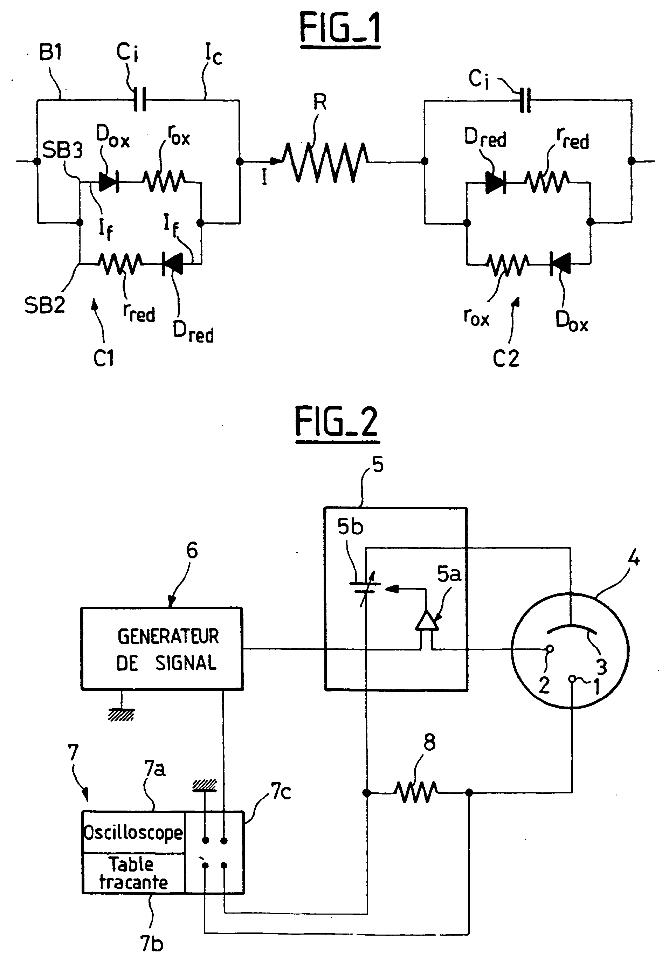

Pour mieux comprendre les mécanismes électrochimiques en jeu lors d'un chauffage ohmique une modélisation électrique de la cellule de chauffage ohmique, est représentée à la figure 1. Cette modélisation permet d'illustrer le rôle des paramètres de résistance aux phénomènes électrochimiques du matériau utilisé : la chute de potentiel interfaciale des électrodes testées supposées identiques, respectivement $(\Delta E_i)_1$ et $(\Delta E_i)_2$, et la capacité interfaciale $C_i$ de chaque électrode.

Schématiquement, l'interface réactionnelle d'une électrode avec son environnement immédiat est modélisée par un circuit électrique équivalent, circuit C1 pour la première électrode et circuit C2 pour la seconde électrode, les deux circuits étant reliés par une résistance R, que possède la solution de la cellule. Si I est le courant qui traverse la solution, le produit RI constitue la chute ohmique destinée à chauffer le fluide traité par effet Joule. Ce produit RI représente la partie essentielle de la tension $\Delta U$ appliquée entre les électrodes, complétée par les chutes de potentiel aux interfaces électrodes-solution pour chaque électrode, respectivement $(\Delta E_i)_1$, $(\Delta E_i)_2$, appelées ci-après chute de potentiel interfaciale.

Différents courants peuvent circuler dans la cellule en fonction de la différence de potentiel appliquée aux bornes des électrodes pour une fréquence donnée. A chaque interface, le courant I est la somme de deux courants, $I_c$ et $I_f$, circulant dans deux des trois branches parallèles de chaque circuit :

- une branche capacitive, B1, comportant un condensateur de capacité $C_i$, correspondant à la capacité interfaciale de l'électrode, formée par le va-et-vient des charges du courant alternatif (à la manière de la charge et la décharge d'un condensateur, d'où le modèle utilisé), ce va-et-vient formant le courant capacitif $I_c$ qui génère l'effet Joule sans déclencher de réaction chimique : le courant capacitif $I_c$ est le courant utile en chauffage ohmique ;
- une branche d'impédance à seuil, traduisant les réactions électrochimiques de l'interface suivant le sens du courant alternatif appliqué ; un modèle simple est constitué par une sous-branche dite réductrice SB2 et une sous-branche dite oxydante SB3, comportant chacune une diode de sens opposé, respectivement $D_{red}$ et $D_{ox}$, en série avec une résistance, respectivement $r_{red}$ et $r_{ox}$.; les diodes laissent passer le courant dans le sens correspondant à celui de la demi-période de la tension alternative appliquée, dans la branche oxydante SB3 lorsque l'électrode correspondante est anode, et dans le sens réductrice SB2 lorsque l'électrode est cathode.

Dépasser le seuil de déclenchement des diodes correspond au déclenchement des réactions électrochimiques. Ce dépassement est obtenu lorsque la tension aux bornes des circuits, correspondant à la chute de potentiel interfaciale $\Delta E_i$, est supérieure à une valeur limite $\Delta E_i$, admissible, au-delà de laquelle le seuil énergétique de déclenchement de réactions électrochimiques est franchi. Le courant qui traverse alors l'impédance équivalente de cette branche à seuil, appelé courant faradique $I_f$, est le courant nuisible en chauffage ohmique.

Les deux électrodes servant alternativement d'anode et de cathode, le courant faradique circule respectivement dans l'une puis l'autre sous-branche SB3 et SB2 de chaque circuit modélisé, selon deux sens opposés. Par exemple, si le courant I circule du circuit C1 vers le circuit C2 (de gauche à droite sur la figure) lors d'une demi-période donnée, le courant de fuite circule dans la sous-branche oxydante SB3 du circuit C1, et une réaction d'oxydation se produit à cette électrode. De même, si, pendant cette même demi-période, la chute de potentiel interfaciale de C2 est supérieure à la valeur limite, une partie du courant circule dans la demi-branche réductrice SB2 du circuit C2, et une réaction de réduction est observée au niveau de cette électrode.

Afin de chauffer un fluide sans risque de dégradation, il convient d'opérer dans des conditions telles que la chute de potentiel interfaciale de chaque électrode reste en-deçà des valeurs limites $\Delta E_{Ia}$ et $\Delta E_{Ic}$ correspondant au déclenchement des réactions électrochimiques oxydantes ou réductrices lorsque l'électrode est respectivement anode ou cathode, afin que le courant I ne circule que dans les branches capacitives des circuits équivalents C1 et C2 présentés à la figure 1.

La figure 2 illustre un montage de voltampérométrie cyclique apte à déterminer les valeurs limites, anodique et cathodique, de la chute de potentiel interfaciale d'une électrode de chauffage ohmique, pour chaque matériau constitutif d'une telle électrode.

La voltampérométrie cyclique est classiquement utilisée pour caractériser la nature et la concentration des espèces modifiées par le passage d'un courant à un potentiel donné entre les électrodes d'une cellule d'électrolyse. Les voltamogrammes obtenus, courbes représentant l'intensité du courant circulant entre les électrodes en fonction de la tension appliquée, permettent, en particulier, de suivre la cinétique de réactions chimiques et électrochimiques.

Le montage de mesure voltampérométrique de la figure 2 est adapté à la détermination des valeurs extrêmes de la différence de potentiel entre une électrode testée et une électrode de référence sans qu'apparaissent de réactions électrochimiques, et à la détermination des capacités interfaciales de l'électrode testée. De telles valeurs définissent une plage de potentiel admissible, caractéristique du matériau ou du revêtement de cette électrode. L'appareillage comprend l'électrode testée 1, dite de travail, une électrode de référence 2 dont le potentiel est stable, l'électrode de référence étant dans l'exemple de réalisation une électrode saturée au calomel, et une troisième électrode 3, appelée contre-électrode, pour boucler le bilan des charges transférées de l'électrode de travail à la solution. L'intensité du courant mesurée circule entre l'électrode de travail et la contre-électrode.

La solution de référence est une solution corrosive à 20 grammes par litre de sel NaCl, afin de se placer dans des conditions d'attaque chimique agressive, et la température est de 20°C.

Les trois électrodes sont disposées dans une cellule 4 contenant la solution corrosive. Un potentiostat 5 muni d'un comparateur 5a et d'un variateur 5b est appliqué aux bornes 2 et 3 de la cellule 4, afin d'asservir le potentiel de l'électrode de travail 1 par rapport au potentiel de l'électrode de référence 2 à la valeur de la tension variable appliquée E(t). Un générateur de signal 6, couplé à la cellule 4 via le potentiostat 5, applique aux bornes de la cellule un signal périodique. Dans l'exemple de réalisation, le signal appliqué est une tension triangulaire variant entre -1 et +1 volt par rapport au potentiel de l'électrode de référence avec une vitesse de balayage de 100 mV/s, soit une fréquence de 0,05 Hz. Le circuit est complété par des moyens de visualisation 7, constitués par un oscilloscope 7a et une table traçante 7b reliés, par des bornes de connexion 7c, d'une part au potentiostat 5 et à la cellule 4 entre les bornes d'un shunt 8 et d'autre part au générateur de signal 6.

En fonctionnement, le potentiostat impose un balayage de potentiel linéaire E(t) dans le temps à l'électrode de travail, le potentiel variant linéairement par rapport au potentiel de l'électrode de référence, avec la vitesse de balayage de 100 millivolts par seconde. Le courant I mesuré entre l'électrode de travail 1 et la contre-électrode 3 est enregistré aux bornes de la résistance 8 par la table traçante 7b.

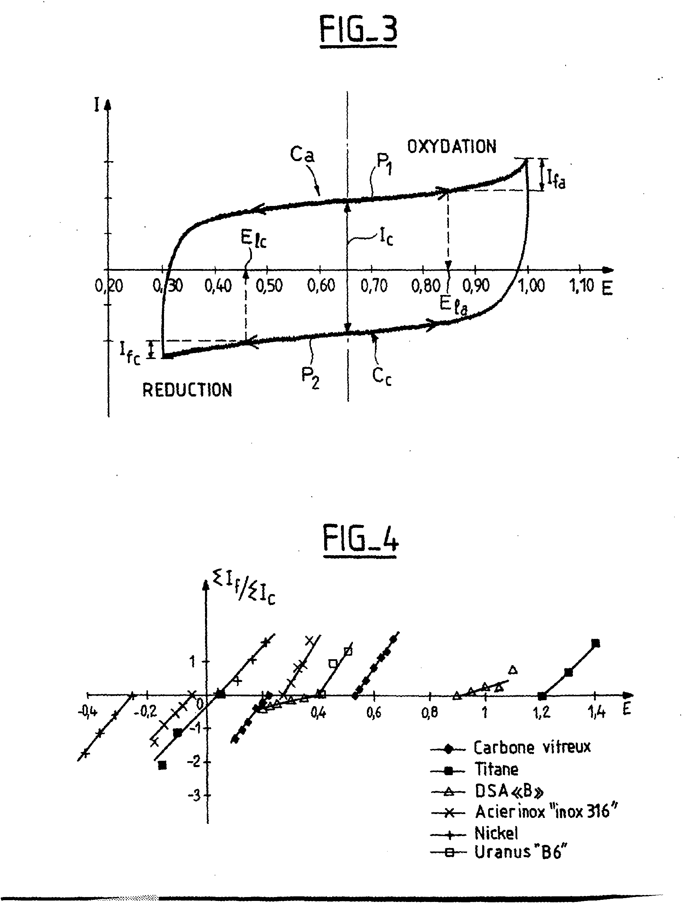

Le voltammogramme de l'intensité du courant en fonction de la tension appliquée I = f(E), tel qu'illustré à la figure 3, est celui obtenu pour un matériau de type "B", faisant partie de la famille des DSA, composé de titane revêtu, en proportions égales, de $RuO_2$ et de $IrO_2$.

Pour les valeurs positives mesurées du courant I, correspondant au demi-cycle ascendant du balayage périodique, l'électrode de travail 1 constitue une anode. La courbe anodique $C_a$ présente une partie centrale sensiblement linéaire, prolongée vers les valeurs supérieures par une portion P1 de courbure positive.

Pour les valeurs négatives du courant I, correspondant au demi-cycle descendant du balayage périodique, l'électrode de travail 1 constitue une cathode. La courbe cathodique correspondante $C_c$ présente une partie centrale sensiblement linéaire, prolongée vers les valeurs inférieures de potentiel par une portion P2 de courbure négative.

Les portions P1 et P2 correspondent respectivement aux phénomènes d'oxydation et de réduction générés lorsque le potentiel à l'électrode va au-delà des valeurs limites pour lesquelles un courant faradique est produit, comme expliqué plus haut en référence à la figure 1.

La limite supérieure admissible de la différence de potentiel de l'électrode étudiée est identifiée comme étant la valeur du potentiel référencée $E_{Ia}$ sur la figure, correspondant au changement de courbure de la courbe anodique $C_a$ à la jonction de la portion P1. Le courant excédentaire $I_{fa}$, qui apparaît au-delà de la valeur $E_{Ia}$, correspond au courant faradique nuisible décrit précédemment, et induit par des réactions électrochimiques.

De façon similaire, la limite inférieure admissible de la différence de potentiel interfaciale de l'électrode étudiée est déterminée par la valeur du potentiel, référencé $E_{Ic}$ sur la figure, correspondant au changement de courbure de la courbe cathodique $C_c$ à la jonction de la portion P2 : ce courant excédentaire $I_{fc}$ qui apparaît au-delà de la valeur $E_{Ic}$, correspond en fait au courant faradique induit par des réactions électrochimiques, tel que décrit en référence à la figure 1.

Les parties linéaires centrales des courbes $C_a$ et $C_c$ correspondent à la circulation alternative d'un courant capacitif $I_c$ entre les électrodes jouant successivement le rôle d'anode et de cathode, comme expliqué en référence à la modélisation. La plage admissible de valeurs $\Delta E_I$, ayant pour bornes $E_{Ia}$ et $E_{Ic}$, définit la valeur de différence de potentiel du matériau constitutif de l'électrode de travail pour laquelle il est alors assuré, aux incertitudes de mesures près définies en fonction du ratio $I_c/I_f$, qu'aucune réaction électrochimique n'est déclenchée.

De préférence, les valeurs des potentiels d'inversion de la tension appliquée, égaux à +1 volt et -1 volt dans l'exemple de réalisation, sont ajustées de sorte que les courants capacitifs anodiques et cathodiques générés soient sensiblement équivalents. Une dissymétrie au niveau des valeurs anodiques et cathodiques conduirait à ne pas considérer la même charge capacitive et donc fournirait des résultats erronés.

Il est à noter que les valeurs extrêmes des plages de différence de potentiel varient en fonction de la variation correspondante des courants anodique et cathodique. Ces derniers étant liés par l'équilibre du bilan des charges de l'ensemble, les potentiels extrêmes s'ajustent d'eux-mêmes sur la courbe des courants : la position de leurs extrémités varie de façon "opposée" et se déduit de la pente des courants anodique et cathodique correspondants. Pour comparer les plages de différence de potentiel, il suffit donc de connaître leurs amplitudes de variation sans avoir à connaître les valeurs de leurs bornes extrêmes.

Les voltamogrammes, tels que celui illustré à la figure 3, présentent une forme globale de type hystérésis qui permet d'accéder à une détermination précise de la plage de différence de potentiel interfaciale limite $\Delta E_l$. Une telle détermination est obtenue selon l'invention par la mesure du rapport entre les courants faradiques et capacitifs $\Sigma I_f/\Sigma I_c$, $\Sigma I_f$ étant la somme des courants faradiques et $\Sigma I_c$, la somme des courants capacitifs constants obtenus dans la plage d'utilisation $\Delta E_l$. Les courbes correspondantes, dites de courant faradique, sont illustrées sur la figure 4 pour les différents matériaux massiques : carbone vitreux, titane, nickel, "uranus B6" (alliage à base de Fe, avec 25% de Ni, 20% de Cr, 4,5% de Mo, 1,5% de Cu), acier "Inox 316L" et DSA "B".

Les valeurs de $\Sigma I_f$ et $\Sigma I_c$, correspondant à l'intégration mathématique des valeurs de l'intensité des courants sur les plages de potentiel correspondantes. Elles sont directement mesurées, respectivement, par la somme des aires des surfaces $Sf_a$ et $Sf_c$ (figure 3), correspondant à la présence des courants faradiques, $I_{fa}$ et $I_{fc}$, pour les valeurs de potentiel au-delà de la plage admissible $\Delta E_l$ d'une part et, d'autre part, à la surface $Sc$ correspondant à la présence du courant capacitif $I_c$ dans la plage $\Delta E_l$.

Ces courbes de courant faradique permettent de déterminer avec précision les plages admissibles $\Delta E_l$ pour les différents matériaux d'électrode testés, par détermination des valeurs limites de cette plage en approximant linéairement les valeurs obtenues lorsque circulent des courants faradiques. La détermination précise des valeurs limites peut être importante dans ces certaines circonstances, c'est-à-dire lorsque les matériaux utilisés ont un comportement nuisible dès qu'apparaissent les courants faradiques, ce qui constitue un sérieux handicap lors d'un dépassement accidentel de la différence de potentiel appliquée dans les conditions de chauffage ohmique.

A ce sujet, la valeur des pentes des courbes de courant faradique anodique et cathodique présentées par les parties linéaires des courbes représentées en figure 4 peuvent fournir un critère de risque : plus ces pentes sont faibles, plus l'excès de réaction faradique nuisible déclenchée dans le cas de dépassement accidentel de la $\Delta E_l$ est limité.

Par exemple, le titane "T40" subit une vague de passivation irréversible consécutive à la formation d'une couche oxydée isolante lorsque le potentiel dépasse 1,3 volts par rapport à l'électrode de référence, alors que le nickel et l'inox "316L" subissent un fort courant de dissolution lorsque leur potentiel limite anodique est dépassé.

Les tableaux Ia et Ib suivants présentent les résultats obtenus respectivement pour les différents matériaux massiques d'électrodes et pour des matériaux de type DSA ("B" ; "C" en proportions égales de $IrO_2$ et de $Ta_2O_5$, "LZA" revêtement en $IrO_2$ et $RuO_2$, "Beer" revêtement en $RuO_2$ et "PITA" revêtement en $IrO_2$ et $Ta_2O_2$). Pour ces différents matériaux massifs, le tableau indique les valeurs des potentiels limites $E_{la}$, et $E_{lc}$, la chute de potentiel interfaciale limite ($\Delta E_l = E_{la} - E_{lc}$).

Tableau Ia

| Matériaux | Hastelloy | Carbone vitreux | Titane | Nickel | Uranus | Inox "316L" |
|---|---|---|---|---|---|---|
| $E_{la}$(V) | 0,175 | 0,525 | 1,2 | 0,05 | 0,4 | 0,275 |
| $E_{lc}$(V) | -0,125 | 0,225 | 0 | -0,25 | 0 | -0,05 |
| $\Delta E_l$(V) | 0,3 | 0,3 | 1,2 | 0,3 | 0,4 | 0,325 |

Tableau Ib

| Matériaux DSA | "B" | "C" | LZA | "BEER" | "PITA" |
|---|---|---|---|---|---|
| $E_{la}$ | 0,9 | 0,85 | 1,2 | 0,15 | 0,5 |
| $E_{lc}$ | 0,2 | -0,1 | 0,55 | 0,6 | -0,5 |
| $\Delta E_l$ | 0,7 | 0,45 | 0,65 | 0,45 | 1 |

Ces tableaux sont exploitables pour servir de critère d'ajustement des conditions d'utilisation en chauffage ohmique de chaque matériau. D'autres considérations spécifiques propres à chaque matériau sont à prendre en considération au cas par cas. Par exemple, le titane "T40" se présenterait a priori comme le mieux adapté des matériaux massifs, car sa plage de potentiel admissible $\Delta E_l$ est trois à quatre fois supérieure à la valeur des autres matériaux massifs. Cependant, ce matériau n'est pas utilisable du fait de sa passivation dans la zone de déclenchement des phénomènes électrochimiques qui suit la plage admissible de ce matériau.

La plage de différence de potentiel admissible $\Delta E_l$ est comparée, pour chaque matériau, à la valeur de la chute de potentiel interfaciale mesurée directement dans des conditions de chauffage ohmique. Cette comparaison permet de vérifier si cette valeur se trouve dans la plage admissible. Dans le cas contraire, il conviendrait d'ajuster les conditions opératoires, c'est-à-dire d'augmenter la fréquence de la tension appliquée ou de diminuer la densité de courant. Un tel ajustement diminue la valeur de la chute de potentiel interfaciale. Lorsque cette valeur passe en-dessous de la valeur de la plage admissible, le matériau des électrodes convient au chauffage ohmique, en ce sens qu'une absence de déclenchement de réaction électrochimique est garantie.

Ainsi, une augmentation de fréquence de la tension (60 volts efficaces), passant par exemple de 50 Hz à 2500 Hz, permet une diminution de chute de potentiel interfaciale de 0,5 V à 1 V suivant le matériau. Par ailleurs, une diminution de la densité de courant de 5000 A/m$^2$ à 2500 A/m$^2$ à 50 Hz permet pour le DSA "B" une diminution de chute de potentiel de 0,65 V à 0,35 V.

Afin de mesurer la chute de potentiel interfaciale des électrodes utilisées dans les conditions de chauffage ohmique, un procédé de détermination de cette chute de potentiel interfaciale pour un matériau donné et un dispositif de mise en oeuvre de ce procédé sont maintenant décrits.

La méthode consiste à mesurer la différence de potentiel entre une électrode de chauffage ohmique, constituée par le matériau à tester, et une sonde de mesure dont la distance à cette électrode varie ; puis à varier la distance entre cette électrode et la sonde, et à extrapoler à distance nulle la droite de régression obtenue à partir des différentes valeurs de différence de potentiel mesurées pour différentes distances. La valeur de l'ordonnée à l'origine, divisée par deux du fait de l'obtention de la mesure crête à crête (et non de la mesure instantanée) représente alors la valeur de la différence de potentiel interfaciale, caractéristique du matériau dans les conditions du chauffage ohmique.

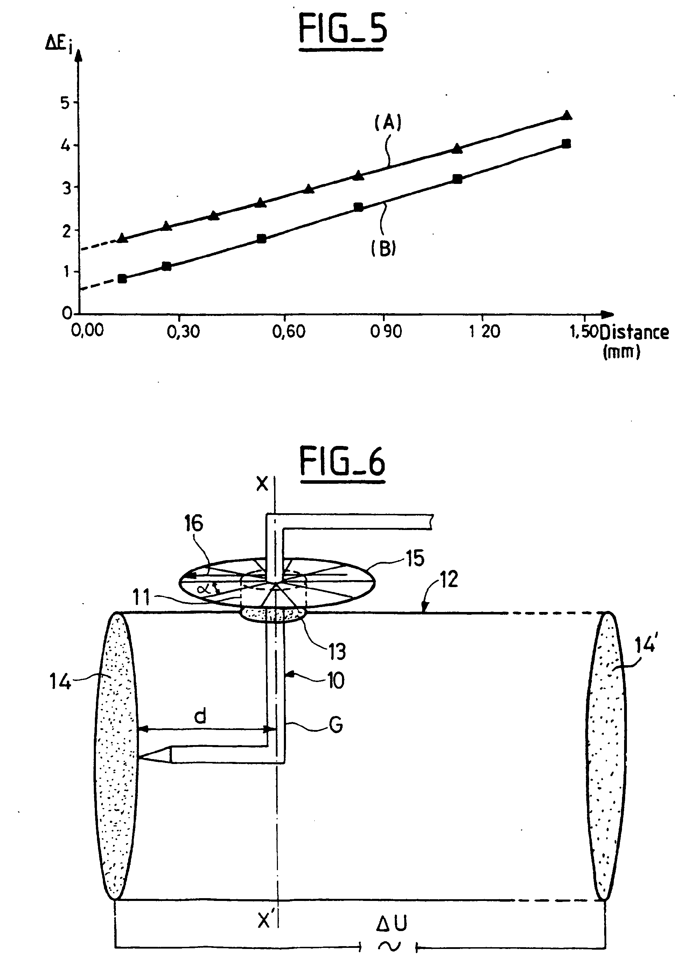

La figure 5 illustre deux exemples de diagramme obtenus pour des électrodes en matériau DSA "B", dans une cellule contenant une solution de chlorure de sodium corrosive à 20 g par litre, une tension égale à 60 volts efficaces étant appliquée aux bornes de la cellule, avec une densité de courant de 5200 A/m$^2$, et une température de 60°C. La valeur extrapolée $\Delta E_i$ vaut 1,3 volts mesurée crête à crête, c'est-à-dire 0,65 volts maximum en valeur instantanée, la tension appliquée étant respectivement celle du secteur, de fréquence égale à 50 Hz, droite (A), et une tension de fréquence égale à 2500 Hz, droite (B). Comme indiqué précédemment, une augmentation sensible de fréquence provoque une diminution de chute de potentiel interfaciale $\Delta E_i$, égale à 0,3 V (en valeur instantanée) dans le cas présent.

L'appareillage utilisé pour obtenir des mesures précises est illustré à la figure 6. La sonde 10 est une tige de platine de diamètre égale à 1 mm, montée sur un support 11 apte à effectuer des pas de mesure de faible amplitude, de quelques dixièmes de millimètres à moins de 0,1 mm, et à proximité de l'électrode de travail. La sonde a une longueur de 10 cm et est revêtue d'une gaine thermorétractable G sur la partie de la sonde immergée dans la solution de la cellule. La tige est montée sur la cellule 12 à l'aide d'un presse-étoupe 13, l'axe X'X de la sonde étant à une distance égale à 13 mm de l'axe de l'électrode testée 14. Pour renforcer l'étanchéité de la sonde lors de sa rotation à l'intérieur du presse-étoupe, un joint à base de silicone est ajouté entre la sonde et le presse-étoupe. La partie de la sonde 10 plongeante est courbée de manière à obtenir un contact entre l'extrémité affinée de la sonde et l'électrode à tester 14. Cette extrémité est plane et se présente sous la forme d'un disque de platine de diamètre égal à 0,1 mm.

Un rapporteur d'angle 15 est adapté sur l'axe principal X'X de la sonde et un système de repérage à index 16 est disposé perpendiculairement à l'axe X'X de la sonde. Sont mesurées la différence de potentiel entre la sonde et l'électrode à tester 14 reliée à la masse d'un oscilloscope (non représenté) sur une première voie de mesure de l'oscilloscope, ainsi que la tension totale $\Delta U$ appliquée entre l'électrode de mesure et l'autre électrode (14') de la cellule, sur une deuxième voie de mesure.

La rotation de la sonde autour de son axe, par pas de l'ordre du degré, incrémente la mesure d'une dizaine de points de mesure de la chute de potentiel. La distance entre l'extrémité de la sonde et l'électrode testée est déduite de l'angle de rotation repéré par l'index, et reste inférieure à 1 mm pour toutes ces mesures. Si d est la distance entre l'axe de la sonde et l'électrode mesurée, $\alpha_0$ l'angle repéré sur le rapporteur lorsque la sonde est en contact avec cette électrode, et $\alpha$ l'angle lors d'une mesure, la distance x entre l'extrémité de la sonde et l'électrode testée vaut :

$$x = d\left(1 - \frac{\cos\alpha}{\cos\alpha_0}\right)$$

L'incertitude de la mesure des repérages de la distance d résulte de l'irrégularité de la surface apparente de la sonde de platine, cette surface variant avec la rotation de l'axe vertical X'X de la tige de platine. Pour diminuer cette incertitude, le diamètre de la sonde de platine est minimisé à 0,1 mm.

Le tableau II ci-dessous rassemble les valeurs de différence de potentiel interfaciale mesurées $\Delta E_i$ pour différents matériaux constitutifs de l'électrode testée, dans les conditions précédemment décrites (en particulier à 50 Hz de fréquence et à 5000 A/m$^2$ de densité de courant). Sur ce tableau ont également été reportées les valeurs des plages de potentiel interfacial admissibles $\Delta E_l$ de ces mêmes matériaux, telles qu'établies par analyse voltampérométrique ainsi que les valeurs de la rugosité.

Tableau II

| Matériau | DSA "A" (RuO$_2$) | DSA "B" | DSA "C" | Carbone vitreux | Inox | Hastelloy | Titane |
|---|---|---|---|---|---|---|---|
| $\Delta E_i$(V) | 0,7 | 0,65 | 0,65 | 2,3 | 2,5 | 2,7 | 4,8 |
| $\Delta E_l$(V) | 0,7 1 à 2* | >0,65** | 1* | 0,3 | 0,325 | 0,3 | 1,2 |
| Rugosité ($\mu$m) | 1,3 | 0,7 | 1,8 | 0,6 | 0,05 | 0,08 | 0,1 |

* valeurs établies par des mesures d'analyse par chromatographie en phase gazeuse et par révélateur (papier KI-amidon).

** la valeur mesurée à 0,05 Hz est de 0,45 V et correspond à un déplacement des fronts de réduction/oxydation de quelques centaines de millivolts, ce qui correspond à une valeur au moins égale à 0,65 V à la fréquence de 50 Hz.

D'après ce tableau, il est aisé de conclure que les matériaux de type DSA présentent des valeurs de tension interfaciale allant de 0,6 à 0,7 volt, situées dans les plages de tension interfaciale admissible, soit 1 à 2 volts suivant le matériau DSA, correspondant au déclenchement des réactions électrochimiques : ces matériaux sont donc particulièrement adaptés au chauffage ohmique. Quant aux matériaux massifs étudiés, ils ont tous une valeur de différence de potentiel interfaciale supérieure à celle de leur plage limite admissible.

Afin de comparer le comportement des matériaux constitutifs d'électrodes en chauffage ohmique, un paramètre global, intégrant la chute de potentiel interfaciale $\Delta E_i$ et la capacité électrique interfaciale $C_i$ de chaque matériau, est ci-après utilisé pour servir de critère de comparaison. Ce paramètre global, égal à $\Delta E_l.C_i^2$, est caractéristique de l'énergie de chauffe d'un matériau traversé par un courant électrique dans une solution où se produit un dégagement de chaleur par effet Joule.

Un simple calcul montre en effet que cette énergie est proportionnelle au paramètre global d'un matériau donné, pour une résistance donnée de la solution à chauffer, et pour une même vitesse de balayage du potentiel appliqué aux électrodes. Les valeurs des capacités $C_i$ sont déterminées par voltampérométrie, à partir du courant mesuré, par la relation $I_c = 2C_i v$, v étant la vitesse de balayage (égale à 100 mV/s dans les conditions de mesures voltampérométriques cycliques telles que définies plus haut).

Une comparaison des paramètres globaux $\Delta E_l.C_i^2$ de différents matériaux massifs et de type DSA, rassemblés respectivement dans les tableaux IIIa et IIIb suivants, montre la nette supériorité des matériaux DSA par rapport aux matériaux massifs. Les valeurs des paramètres globaux ont été rapportées à celles de l'acier inoxydable.

Tableau IIIa

| Matériaux massifs | Acier Inox | Titane | Carbone vitreux | Nickel | Hastelloy |
|---|---|---|---|---|---|
| $C_i$($\mu$F/cm$^2$) | 35 | 50 | 260 | 27 | 63 |
| $\Delta E_l$(V) | 0,325 | 1,2 | 0,3 | | 0,3 |
| $C_i^2.\Delta E_l$ | 1 | 7,5 | 51 | 0.5 | 3 |

Tableau IIIb

| Matériaux DSA | "B" | C | LZA | "BEER" | "PITA" |
|---|---|---|---|---|---|
| $C_i$($\mu$F/cm$^2$) | 1900 | 5600 | 27000 | 44000 | 39000 |
| $\Delta E_l$ (V) | 0.7 | 0,45 | 0,65 | 0,45 | 1 |
| $C_i^2.\Delta E_l$ | 0,06.10$^6$ | 0,35.10$^6$ | 1,2.10$^6$ | 2,2.10$^6$ | 3,8.10$^6$ |
| Rugosité ($\mu$m) | 0,7 | 1,8 | 6,96 | 3,22 | - |

Les matériaux massifs présentent des paramètres globaux dont les valeurs sont sans commune mesure avec ceux des matériaux DSA, puisqu'ils diffèrent d'un facteur $10^4$ à $10^5$. De plus, le matériau massif en apparence le plus performant des matériaux massifs, à savoir le carbone vitreux présente des incertitudes importantes sur la détermination des capacités interfaciales, supérieures à 50%. Ces incertitudes sont dues au fait que la capacité interfaciale est sensible à l'état de surface des électrodes, et que cet état est très variable pour le matériau en question.

Le paramètre global ($C_i^2.\Delta E_l$) des matériaux DSA est calculé à partir de mesures de la plage de potentiel interfaciale admissible $\Delta E_l$ à partir d'une solution aqueuse de chlorure de sodium à 20 g par litre, les valeurs des capacités $C_i$, déterminées selon le protocole précédemment indiqué, présentent des valeurs particulièrement stables à la vitesse de balayage de 100 mV/s.

La nette supériorité des matériaux DSA par rapport aux matériaux massifs pour les applications de chauffage ohmique est principalement due aux valeurs élevées de la capacité interfaciale de ces matériaux.

De plus, les matériaux DSA sont plus résistants à une surtension au niveau de leur interface, du fait d'une plus faible augmentation de courant faradique, ce qui se traduit par des pentes de régression des courbes de courant faradique ($\Sigma I_f/\Sigma I_c$) plus faible pour les matériaux DSA, au-delà des plages de potentiel limites $\Delta E_l$, comme illustré à la figure 4.

Concernant les surfaces d'électrodes en chauffage ohmique, il est apparu qu'une rugosité de surface limitée, définie comme la variation maximale de l'écart entre la hauteur des aspérités et la surface de base est préférable, notamment pour les applications agro-alimentaires pour des raisons d'hygiène et d'encrassement. Une rugosité au plus égale à 1,8 $\mu$m, de préférence 1 $\mu$m, est préconisée.

D'autres conditions opératoires, en particulier la température, peuvent influer par ailleurs sur les valeurs des chutes de potentiel interfaciales des matériaux constitutifs en chauffage ohmique.

L'influence de la température n'est pas critique dans la mesure où sa variation, qui met en oeuvre des phénomènes compensatoires, se traduit par une conservation du paramètre global $C_i^2.\Delta E_l$ ; ainsi une augmentation de température, qui peut atteindre des valeurs de l'ordre de 140°C en chauffage ohmique, présente un effet pénalisant sur la plage de potentiel admissible $\Delta E_l$, largement compensé par un effet bénéfique sur la valeur de la capacité interfaciale.

L'invention n'est pas limitée aux applications citées et peut par exemple s'appliquer à d'autres techniques où des matériaux sous tension sont au contact avec un produit, par exemple dans les techniques à champs électriques pulsés (CEP en abrégé). Dans ce dernier contexte, où il s'agit d'obtenir des champs de grande intensité à haute cadence entre la surface d'une sonde introduite et l'orifice qui l'accueille, les mêmes problèmes de respect des plages admissibles de différences de potentiel se posent.

**Revendications**

1. Appareil de chauffage ohmique, **caractérisé en ce qu'**il comprend des électrodes en matériau de type DSA, ces électrodes comportant un substrat en titane recouvert d'au moins une couche d'oxydes métalliques de métaux nobles choisis parmi le Ruthénium, le Tantale, l'Iridium et leurs mélanges.

2. Appareil selon la revendication 1, **caractérisé en ce que** la couche d'oxyde comporte au moins deux desdits oxydes métalliques dans des proportions allant de 25/75 à 75/25 en poids.

3. Procédé de sélection d'électrodes pour un appareil de chauffage ohmique selon la revendication 1 ou 2, **caractérisé en ce qu'**il consiste à vérifier que la chute de potentiel interfaciale ($\Delta E_i$) à l'interface électrode - solution dans des conditions de chauffage ohmique, est inférieure à la plage de potentiel admissible des électrodes ($\Delta E_l$) au-delà de laquelle le seuil énergétique de déclenchement de réactions électrochimiques est franchi, cette plage de potentiel étant déterminée par voltampérométrie.

4. Procédé selon la revendication 3, **caractérisé en ce qu'**il consiste à:

   - disposer une sonde de mesure (10) dans une cellule de chauffage ohmique , cette cellule comportant une électrode à tester (14),
   - faire varier la distance entre la sonde et l'électrode à tester, et
   - déterminer la chute de potentiel interfaciale ($\Delta E_i$) par extrapolation linéaire à distance nulle des différentes valeurs de potentiel mesurées entre l'électrode à tester (14) et la sonde (10) pour les différentes distances précitées.

5. Procédé selon la revendication 4, dans lequel on utilise, comme sonde de mesure (10), une tige de platine d'axe vertical (X'X) et de diamètre sensiblement égal ou inférieur à 0,1 mm, cette tige étant recourbée à son extrémité pour venir en contact avec l'électrode à tester (14), et un index de mesure de l'angle de rotation de la tige autour de l'axe (X'X), les distances précitées entre la sonde et l'électrode à tester étant déduites à partir de ces mesures angulaires.

**6.** Procédé selon la revendication 4 ou 5, **caractérisé en ce que** la sonde de mesure (10) est revêtue d'une gaine thermorétractable (G), **en ce que** la sonde est montée sur la cellule (12) à l'aide d'un presse-étoupe (13), **en ce qu'**un joint à base de silicone est ajouté entre la sonde et le presse-étoupe pour assurer la rotation de la sonde à l'intérieur du presse-étoupe, et **en ce que** les valeurs de potentiel sont mesurées entre l'électrode à tester (14) et la sonde sur une première voie d'un oscilloscope, alors que la tension totale appliquée ($\Delta U$) entre l'électrode à tester (14) et une autre électrode (14') de la cellule est mesurée sur une deuxième voie de mesure de l'oscilloscope.

**7.** Procédé selon l'une des revendications 3 à 6, **caractérisé en ce que** la plage de potentiel admissible ($\Delta E_l$) est obtenue en reportant, sur une courbe de courant faradique, le rapport entre les courants faradiques et capacitifs $\Sigma I_f/\Sigma I_c$ sur la totalité du domaine de potentiel balayé, $\Sigma I_f$ étant la somme des courants faradiques, et $\Sigma I_c$ étant la somme des courants capacitifs constants dans la plage de potentiel admissible ($\Delta E_l$).

**8.** Procédé selon la revendication 7, **caractérisée en ce qu'**un critère de risque au-delà de la plage de potentiel admissible ($\Delta E_l$) est défini par la pente linéaire de la courbe de courant faradique ($\Sigma I_f/\Sigma I_c$) dans les plages de valeurs de chutes de potentiel allant au-delà des valeurs limites de la plage de potentiel admissible ($\Delta E_l$).

**Claims**

**1.** Ohmic heating apparatus, **characterized in that** it comprises electrodes made of a DSA type material, these electrodes comprising a titanium substrate covered in at least one layer of metallic oxides of noble metals selected from ruthenium, tantalum, iridium, and mixtures thereof.

**2.** Apparatus according to claim 1, **characterized in that** the oxide layer includes at least two of said metallic oxides in proportions lying in the range 25/75 to 75/25 by weight.

**3.** A method of selecting electrodes for ohmic heater apparatus according to claim 1 or claim 2, **characterized in that** the method consists in verifying that the interface potential drop ($\Delta E_i$) at the electrode/solution interface under ohmic heating conditions is less than the acceptable potential range of the electrodes ($AE_l$) beyond which the energy threshold for triggering electrochemical reactions is crossed, said potential range being determined by volt-amp measurement.

**4.** A method according to claim 3, **characterized in that** it consists in:

placing a measurement probe (10) in an ohmic heater cell, said cell including an electrode (14) for testing;
· varying the distance between the probe and the electrode for testing;
· determining the interface potential drop ($\Delta E_i$) by linear extrapolation to zero distance from the various potential values measured between the electrode (14) for testing and the probe (10) at the above-mentioned different distances.

**5.** A method according to claim 4, in which, as a measurement probe (10), use is made of a platinum rod having a vertical axis (X'X) and of diameter substantially equal to or less than 0.1 mm, said rod being curved at its end for coming into contact with the electrode (14) for testing, and an index for measuring the angle of rotation of the rod about the axis (X'X), the above-mentioned distances between the probe and the electrode for testing being deduced from these angle measurements.

**6.** A method according to claim 4 or claim 5, **characterized in that** the measurement probe (10) is coated in a heat-shrink sheath (G), **in that** the probe is mounted on the cell (12) by means of packing (13), **in that** a silicone-based gasket is added between the probe and the packing to enable the probe to turn inside the packing, and **in that** the values of potential are measured between the electrode (14) for testing and the probe on a first oscilloscope channel, while the total voltage ($\Delta U$) applied between the electrode (14) and another electrode (14') of the cell is measured on a second measurement channel of the oscilloscope.

**7.** A method according to any one of claims 3 to 6, **characterized in that** the acceptable potential range ($\Delta E_l$) is obtained by marking on a Faraday current curve the ratio between the Faraday currents and the capacitive currents

$\Sigma I_f/\Sigma I_c$ over the entire scanned potential range, $\Sigma I_f$ being the sum of the Faraday currents, and $\Sigma I_c$ being the sum of the capacitive currents that are constant in the acceptable potential range ($\Delta E_l$).

8. A method according to claim 7, **characterized in that** a risk criterion outside the acceptable potential range ($\Delta E_l$) is defined by the linear slope of the Faraday current curve ($\Sigma I_f/\Sigma I_c$) in the potential drop value ranges extending beyond the limit values of the acceptable potential range ($\Delta E_l$).

**Patentansprüche**

1. Vorrichtung zum ohmschen Heizen, **dadurch gekennzeichnet, dass** sie Elektroden aus einem Material vom dimensionsstabilen Anoden(DSA)-Typ beinhaltet, wobei diese Elektroden ein Substrat aus Titan bedeckt von mindestens einer Schicht aus Metalloxiden von Edelmetallen ausgewählt aus Ruthenium, Tantal, Iridium und ihren Mischungen umfassen.

2. Vorrichtung nach Anspruch 1, **dadurch gekennzeichnet, dass** die Oxidschicht mindestens zwei der Metalloxide in Gewichtsanteilen von 25/75 bis 75/25 umfasst.

3. Verfahren zur Auswahl von Elektroden für eine Vorrichtung zum ohmschen Heizen nach Anspruch 1 oder 2, **dadurch gekennzeichnet, dass** es umfasst:

   Überprüfen, dass der Grenzflächenpotentialabfall ($\Delta E_i$) an der Grenzfläche Elektrode-Lösung unter Bedingungen des ohmschen Heizens kleiner ist als der zulässige Potentialbereich der Elektroden ($\Delta E_l$), ab dem die energetische Schwelle für die Auslösung von elektrochemischen Reaktionen überschritten ist, wobei dieser Potentialbereich durch Voltammetrie bestimmt wird.

4. Verfahren nach Anspruch 3, **dadurch gekennzeichnet, dass** es umfasst:

   - Anordnen einer Messsonde (10) in einer ohmschen Heizzelle, wobei diese Zelle eine zu testende Elektrode (14) umfasst,
   - Variieren des Abstands zwischen der Sonde und der zu testenden Elektrode und
   - Bestimmen des Grenzflächenpotentialabfalls ($\Delta E_i$) durch lineare Extrapolation zum Nullabstand der verschiedenen gemessenen Potentialwerte zwischen der zu testenden Elektrode (14) und der Sonde (10) für die genannten unterschiedlichen Abstände.

5. Verfahren nach Anspruch 4, bei dem als Messsonde (10) ein Platinstab mit vertikaler Achse (X'X) und einem Durchmesser von im Wesentlichen gleich oder kleiner als 0,1 mm verwendet wird, wobei dieser Stab an seinem Ende so gebogen ist, dass er mit der zu testenden Elektrode (14) in Kontakt kommt, und ein Maßindex des Rotationswinkels des Stabs um die Achse (X'X), wobei die genannten Abstände zwischen der Sonde und der zu testenden Elektrode aus diesen Winkelmessungen abgeleitet werden.

6. Verfahren nach Anspruch 4 oder 5, **dadurch gekennzeichnet, dass** die Messsonde (10) mit einer wärmeschrumpfbaren Hülse (G) überzogen ist, dass die Sonde auf der Zelle (12) mit Hilfe einer Kabelverbindung (13) angebracht ist, dass eine Silicondichtung zwischen die Sonde und die Kabelverbindung eingesetzt ist, um die Rotation der Sonde im Inneren der Kabelverbindung zu gewährleisten, und dass die Potentialwerte zwischen der zu testenden Elektrode (14) und der Sonde auf einem ersten Kanal eines Oszilloskops gemessen werden, während die angelegte Gesamtspannung ($\Delta U$) zwischen der zu testenden Elektrode (14) und einer weiteren Elektrode (14') der Zelle auf einem zweiten Messkanal des Oszilloskops gemessen wird.

7. Verfahren nach einem der Ansprüche 3 bis 6, **dadurch gekennzeichnet, dass** der zulässige Potentialbereich ($\Delta E_l$) durch Ermitteln des Verhältnisses zwischen den Faradayschen Strömen und Kapazitätsströmen $\Sigma I_f/\Sigma I_c$ im gesamten abgetasteten Potentialgebiet an einer Kurve des Faradayschen Stroms erhalten wird, wobei $\Sigma I_f$ die Summe der Faradayschen Ströme ist und $\Sigma I_c$ die Summe der Kapazitätsströme im zulässigen Potentialbereich ($\Delta E_l$) ist.

8. Verfahren nach Anspruch 7, **dadurch gekennzeichnet, dass** ein Gefahrenkriterium ab dem zulässigen Potentialbereich ($\Delta E_l$) durch die lineare Steigung der Kurve des Faradayschen Stroms ($\Sigma I_f/\Sigma I_c$) in den Wertebereichen der Potentialabfälle, die über Grenzwerte des zulässigen Potentialbereichs ($\Delta E_l$) hinausgehen, definiert ist.

## FIG_1

## FIG_2

## FIG_3

## FIG_4

—◆— Carbone vitreux
—■— Titane
—△— DSA «B»
—✕— Acier inox "inox 316"
—+— Nickel
—◻— Uranus "B6"

# FIG_5

# FIG_6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 8900384 A
- GB 2282052 A
- FR 2704708
- FR 2722053